# EUROPEAN PATENT APPLICATION

(11) **EP 4 190 847 A1**
(43) Date of publication of application: **07.06.2023**
(21) Application number: 21212017.4
(22) Date of filing: 02.12.2021
(51) Int. Cl.: C08J 9/00, C08J 9/42, D06N 3/00, B29C 70/00, F03D 1/06, B29C 70/44, C08J 9/40

(54) **METHOD OF PRODUCING A WIND TURBINE BLADE, A RESPECTIVELY PRODUCED WIND TURBINE BLADE AND A POROUS MATERIAL SUITABLE FOR USE IN THE PRODUCTION**

(71) Applicant: Siemens Gamesa Renewable Energy A/S, 7330 Brande (DK)
(72) Inventor: Stecher, Harald, 9520 Skørping (DK)
(74) Representative: SGRE-Association

(57) **Abstract**

A porous material provided with a reactive component capable of reacting with an infusion resin is described. In addition, a method of producing a wind turbine blade or a part thereof is described, the method comprising providing a mold containing the porous material, applying an infusion resin into the mold by a vacuum infusion method, in particular vacuum assisted resin transfer molding (VARTM), and curing the infusion resin. A wind turbine blade or a part thereof obtainable by this method is described as well.

## Description

### Field of invention

The present invention relates to the field of wind turbine blades, in particular to a method of producing a wind turbine blade or a part thereof and a respectively produced wind turbine blade or a part thereof as well as a porous material that may be used in the production of a wind turbine blade or a part thereof.

### Art Background

Wind power is considered one of the cleanest, most environmentally friendly energy sources presently available, and wind turbines have gained increased attention for utilizing this energy source. A modern wind turbine typically includes a tower, generator, gearbox, nacelle, and one or more rotor blades (which may also be referred to as wind turbine blades). The rotor blades capture kinetic energy of wind and transmit the kinetic energy in the form of rotational energy so as to turn a shaft coupling the rotor blades to a gearbox or directly to the generator. The generator then converts the mechanical energy to electrical energy that may be fed into a power grid.

Wind turbine blades or parts thereof are typically made of a composite material of glass fiber reinforced polymer resin. A conventionally used method for producing such composite material includes vacuum assisted resin transfer molding (VARTM), wherein a liquid or flowable resin is injected in a mold under application of vacuum. To this end, low viscosity resins may be used which reduce cycle time of manufacture of parts, but the low viscosity often involves the disadvantage of higher sensitivity to race tracks, which are areas and spaces in the lay-up with reduced resistance towards the infusion resin. The resin flows much faster in these spaces and as a result can cause air inclusions and reduced part quality. Race tracks can be caused by wrong design, curved shapes including stiff materials in the lay-up, wrinkles in the materials or vacuum bag, bad sealing along the sides etc.

Conventionally, dense fleece, mats or foams are used to fill gaps around or within complex three-dimensional parts to address problems caused by race tracks. This strategy can be applied easily, if the race tracks are found only around the part e.g. in a closed mold/RTM setup, but all gaps must be completely filled to effectively avoid any race tracks.

However, the flow control inside a part is difficult and time consuming to find the balance between avoiding race tracks and not compromising the structural integrity of the part by weak materials or dry areas.

Thus, there may be a need for further improvements in the production of wind turbine blades or parts thereof by means of a vacuum infusion method, such as vacuum assisted resin transfer molding, in particular for an efficient control of the infusion resin flow in the inside so as to substantially avoid problems caused by race tracks.

### Summary of the Invention

This need may be met by the subject matter according to the independent claims. Advantageous embodiments of the present invention are described by the dependent claims.

According to an aspect of the invention, there is provided a porous material (carrier) provided with (bearing, treated with, functionalized with) a reactive component (compound, moiety) capable of reacting with an infusion resin (or inducing polymerization/curing of an infusion resin) (thereby increasing the viscosity of the infusion resin or gelling the infusion resin). In particular, the reactive component may be configured to increase the viscosity of the infusion resin.

According to a further aspect of the invention, there is provided a method of producing a wind turbine blade or a part thereof, the method comprising providing a mold (mold cavity) containing (in its interior) a porous material as described herein, applying (e.g. injecting) an infusion resin into the mold by a vacuum infusion method, in particular vacuum assisted resin transfer molding (VARTM), and curing (hardening) the infusion resin. The mold may in particular be adapted to an outline of the turbine blade or the part thereof to be produced.

According to a further aspect of the invention, there is provided a wind turbine blade or a part thereof obtainable (or obtained) by a method as described herein.

According to still a further aspect of the invention, there is provided the use of a (functionalized) porous material for increasing the viscosity of an infusion resin in a vacuum infusion method, wherein the porous material is functionalized with a reactive component capable of reacting with the infusion resin.

These aspects of the invention are based on the idea that a porous material functionalized with a reactive component that may rapidly react with an infusion resin may increase the infusion resin's viscosity locally or even gel the infusion resin. As a result, the resin flow may be drastically slowed down or completely stopped at this position without affecting the infusion of the rest of the part. Thus, the resin flow may be controlled without any necessary actions from the outside such as additional inlet ports. The reactive component may be appropriately selected depending on the type of infusion resin such that it may readily react with at least one component of the infusion resin or induce polymerization of the infusion resin to thereby increase the viscosity locally and form a film having a largely reduced or even no flow.

### Detailed Description

Hereinafter, details of the present invention and other features and advantages thereof will be described. However, the present invention is not limited to the following specific descriptions, but they are rather for illustrative purposes only.

It should be noted that features described in connection with one exemplary embodiment or exemplary aspect may be combined with any other exemplary embodiment or exemplary aspect, in particular features described with any exemplary embodiment of a porous material may be combined with any other exemplary embodiment of a porous material and with any exemplary embodiment of a method of producing a wind turbine blade or a part thereof, with any exemplary embodiment of a wind turbine blade, with any exemplary embodiment of a use and vice versa, unless specifically stated otherwise.

Where an indefinite or definite article is used when referring to a singular term, such as "a", "an" or "the", a plural of that term is also included and vice versa, unless specifically stated otherwise.

The expression "comprising", as used herein, includes not only the meaning of "comprising", "including" or "containing", but may also encompass "consisting essentially of" and "consisting of".

Unless specifically stated otherwise, the expression "at least partially", "at least a partial" or "at least (a) part of", as used herein, may mean at least 5 % thereof, in particular at least 10 % thereof, in particular at least 15 % thereof, in particular at least 20 % thereof, in particular at least 25 % thereof, in particular at least 30 % thereof, in particular at least 35 % thereof, in particular at least 40 % thereof, in particular at least 45 % thereof, in particular at least 50 % thereof, in particular at least 55 % thereof, in particular at least 60 % thereof, in particular at least 65 % thereof, in particular at least 70 % thereof, in particular at least 75 % thereof, in particular at least 80 % thereof, in particular at least 85 % thereof, in particular at least 90 % thereof, in particular at least 95 % thereof, in particular at least 98 % thereof, and may also mean 100 % thereof.

In a first aspect, a porous material (or a porous carrier) is provided with (bears, is treated or is functionalized with) a reactive component (such as a moiety) capable of reacting with an infusion resin or inducing polymerization of an infusion resin. As a result, the viscosity of the infusion resin may be increased or the infusion resin may even be gelled. In particular, the reactive component may be configured to increase the viscosity of the infusion resin.

The porous material may serve as a carrier and may therefore also be designated as a porous carrier or simply as a carrier.

The term "porous", as used herein, may in particular mean that the material concerned exhibits a plurality of voids or pores within its structure or texture, typically substantially uniformly distributed within its structure or texture. Typically, a porous material may be characterized by a relatively high specific surface area (large ratio of surface area to mass) .

In an embodiment, the porous material comprises at least one of an open cell foam, a fleece (non-woven), a felt, a mesh and a fabric.

In an embodiment, the porous material has a porosity of from 50 to 90 %, in particular from 60 to 85 %, in particular from 70 to 80 %. In the context of the present specification, the term "porosity" may in particular denote the ratio of the volume of voids to the total volume. The porosity can be determined by conventional porosimetric methods known to a person skilled in the art, for instance by water saturation method or mercury intrusion porosimetry method.

In an embodiment, the entire porous material is provided with a reactive component. In other words, the reactive component may be substantially uniformly distributed over the (bulk) porous material.

In an alternative embodiment, only a part of the porous material is provided with a reactive component. In other words, there may be portions of the porous material bearing a reactive component, whereas other portions may be substantially free of a reactive component.

In an embodiment, the porous material bears a reactive component or moiety that is capable of reacting with an infusion resin, thereby increasing the viscosity of the infusion resin or gelling the infusion resin. In other words, the reactive component may be configured to increase the viscosity of the infusion resin. In particular, the reactive component may induce polymerization of an infusion resin. As will be understood by a person skilled in the art, the reactive component may be appropriately selected depending on the type of infusion resin such that it may readily react with at least one component of the infusion resin or induce polymerization of the infusion resin.

In an embodiment, the reactive component comprises at least one of an amine functional group, a thiol functional group and a hydroxy functional group. A reactive component comprising an amine functional group or a thiol functional group is particularly suitable for an epoxy-amine based infusion resin (typically comprising an epoxy component and an amine component). A reactive component comprising an amine functional group or a hydroxy (alcohol) functional group is particularly suitable for a polyurethane (PU) based infusion resin (typically comprising an isocyanurate component and a hydroxy component). However, other reactive components may be suitable as well, depending on the type of infusion resin, such as a reactive component comprising a disactivating agent for a cure inhibitor or an activator for peroxide, which may in particular be suitable for a radically curing infusion resin, such as an unsaturated polyester or a vinyl ester.

Suitable examples for a reactive component comprising a thiol functional group include, but are not limited to, pentaerythritol tetrakis(3-mercaptopropionate), 2-hydroxymethyl-2-methyl-1,3-propanediol tris-(3-mercaptopropionate) and tris[2-(3-mercaptopropionyloxy)ethyl] isocyanurate.

Suitable examples for a reactive component comprising an amine functional group include, but are not limited to, aliphatic (poly)amines, such as diethylenetriamine (DETA), triethylenetetramine (TETA) and dipropylenetriamine (DPTA), alicyclic (poly)amines, such as 1,3-bis(aminomethyl) cyclohexane (1,3-BAC), 3,3'-dimethyl-4,4'-diaminodicyclohexylmethane (DMDC, Laromin^{®} C-260) and 4,4'-diaminodicyclohexylmethane (1,4-bis(aminocyclohexyl)methane, Wandamin HM), and aliphatic aromatic (poly)amines, such as xylene diamine isomers and derivatives.

Suitable examples for a reactive component comprising a hydroxy functional group include, but are not limited to, glycerol and polypropylene glycol.

In an embodiment, the reactive component may be applied as an oligomer, for instance formed from the respective amine or thiol component with an epoxy component, such as bisphenol A diglycidyl ether (BADGE or DGEBA) or epoxy novolac, preferably in an under-stoichiometric ratio (e.g. a ratio of epoxy component to amine or thiol component of less than 0.5:1). By taking this measure, adhesion of the reactive component to the carrier material may be increased and the volatility and smell of the reactive component may be reduced.

The chemical formulas of some examples for the reactive component are depicted below.

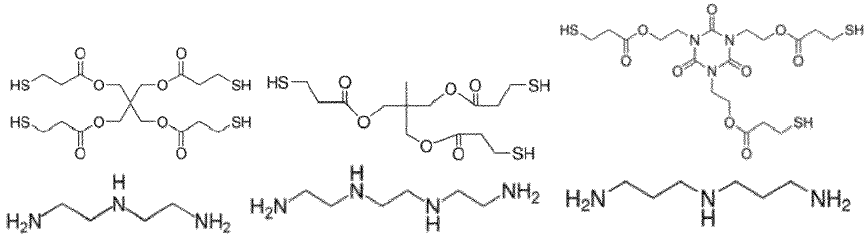

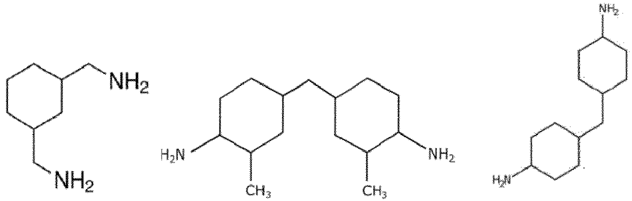

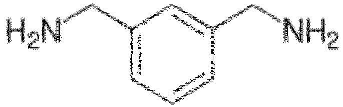

The porous material may in particular be suitable for use in a method of producing a wind turbine blade or a part thereof by means of a vacuum infusion method, in particular vacuum assisted resin transfer molding (VARTM), as described in further detail below.

In a further aspect, a method of producing a wind turbine blade or a part thereof comprises providing a mold containing (in its interior) a porous material as described herein, applying (e.g. injecting) an infusion resin into the mold by a vacuum infusion method, in particular vacuum assisted resin transfer molding (VARTM), and curing (hardening) the infusion resin (within the mold).

The mold typically forms a cavity and may therefore also be designated as mold cavity. The mold may be adapted to an outline of the turbine blade or the part thereof to be produced.

In an embodiment, a porous material as described in further detail above may be arranged or placed in an interior of the mold. Once an infusion resin is applied and flows through the mold, the porous material, more specifically the reactive component of the porous material, may react with the infusion resin locally, thereby increasing its viscosity locally. Since an increase in viscosity is in particular advantageous at race tracks (i.e. areas and spaces with reduced resistance towards the infusion resin) within the mold, it may be advantageous to arrange the porous material provided with reactive component specifically at those race tracks within the mold. To this end, it may also be advantageous to use a porous material wherein only a part thereof is provided with a reactive component.

In an embodiment, an infusion resin is applied, more specifically injected, into the mold by a vacuum infusion method. In the context of the present specification, the term "vacuum infusion method" may in particular denote a molding technique wherein a liquid or flowable resin is injected in a mold under application of vacuum. In particular, vacuum assisted resin transfer molding (VARTM) may be used. The infusion resin may in particular be a liquid or flowable composition comprising components, typically at least two different types of components, that may react with each other to thereby form a cured or hardened product.

In an embodiment, the infusion resin is selected from the group consisting of an epoxy amine infusion resin, a polyurethane infusion resin, a radically curing infusion resin. An epoxy amine resin may for instance comprise an epoxy component and an amine component. A polyurethane infusion resin may for instance comprise an isocyanurate component and a hydroxy component. Examples of a radically curing infusion resin include an unsaturated polyester or a vinyl ester.

In an embodiment, the infusion resin comprises an epoxy amine resin and the reactive component comprises at least one of an amine functional group and a thiol functional group. Suitable examples for a reactive component comprising a thiol functional group as well as for a reactive component comprising an amine functional group are disclosed above in the context of the porous material.

In an embodiment, the infusion resin comprises a polyurethane resin and the reactive component comprises at least one of an amine functional group and a hydroxy functional group. Suitable examples for a reactive component comprising an amine functional group as well as for a reactive component comprising a hydroxy group are disclosed above in the context of the porous material.

In an embodiment, the infusion resin comprises a radically curing infusion resin and the reactive component comprises a disactivating agent for a cure inhibitor or an activator for peroxide.

In an embodiment, the infusion resin (before its application) has a viscosity of less than 100 mPa·s at infusion temperature (such as at 20°C). Such low viscosity resins are advantageous in terms of a reduced cycle time of manufacture of products by vacuum infusion method. Moreover, problems caused by race tracks with such low viscosity resins may be substantially avoided due to an interaction with the reactive component of the porous material. Of course, the method may be used with higher viscous infusion resins as well, but the advantages of the method can in particular be exploited by low viscosity resins. The viscosity of the infusion resin may be determined for instance using a falling-ball viscometer in accordance with ISO 12058-1:2018.

In an embodiment, the viscosity of the infusion resin may be increased by a factor of at least 5, in particular at least 10, as a result of an interaction with the reactive component of the porous material.

In an embodiment, the porous material is provided at only a part of the mold, in particular only at surfaces of the mold, for instance only at one or two surfaces of the mold. By taking this measure, it may be possible to suppress or block resin flow in some directions, for instance in one or two directions, but not in the other directions. Thus, the resin flow may be specifically controlled, as desired, which may be particularly advantageous in case of complex geometries of the wind turbine blade or the part thereof.

In an embodiment, the curing (or hardening) of the infusion resin is not particularly limited and, depending on the type of infusion resin, may take place at room temperature or at elevated temperatures (i.e. may involve heating).

In an embodiment, the method further comprises, after curing the infusion resin, removing the mold to thereby obtain the produced wind turbine blade or the part thereof.

In a further aspect, a wind turbine blade or a part thereof is obtainable or is obtained by a method as described in the foregoing. The porous material used for producing the wind turbine blade (or the part thereof) may still be contained in and form part of the thus obtained wind turbine blade (or the part thereof).

In a further aspect, a (functionalized) porous material is used for increasing the viscosity of an infusion resin in a vacuum infusion method, such as vacuum assisted resin transfer molding, wherein the porous material is functionalized with a reactive component capable of reacting with the infusion resin.

The invention or the embodiments of the invention described in this document can be descriptively summarized as follows:
The surface of a porous material, e.g. open cell foam, fleece, felt, mesh, fabric and alike is treated with a reactive component that can rapidly react with the infusion resin and increase the viscosity locally or gel the infusion resin fast. By this, the resin flow is drastically slowed down or
completely stopped at this position without affecting the infusion of the rest of the part. By this the resin flow can be controlled without any necessary actions from the outside such as additional inlet ports.

Generally speaking, the reactive species added to the porous carrier are of a kind that readily reacts with at least one component of the infusion resin or induces polymerization with the aim to increase the viscosity locally and form a film of much reduced or no flow.

For epoxy-amine systems the reactive species shall be e.g. amine functional or thiol functional. Candidates are (but not limited to) Pentaerythritol tetrakis(3-mercaptopropionate), 2-hydroxymethyl-2-methyl-1,3-propanediol tris-(3-mercaptopropionate) or Tris[2-(3-mercaptopropionyloxy)ethyl] isocyanurate as thiol components and aliphatic (e.g. DETA, TETA, DPTA), alicyclic (e.g. 1,3-BAC, Lamiron C-260 or Wandamin HM) or aliphatic aromatic (e.g. xylene diamine isomers and derivatives) polyamines respectively. To increase adhesion to the carrier material and to reduce volatility and smell the components can be applied as respective oligomers formed with epoxy components (e.g. DGEBA or epoxy novolac) in under-stoichiometric ratio (below 0.5:1 epoxy component to amine or thiol component).

For PU resin systems or partly PU systems the reactive species shall be e.g. amine functional or alcohol functional. (amine functional as shown above, alcohol functional e.g. glycerol, polypropylene glycol) For unsaturated polyester, Vinyl ester or other radically curing systems a disactivating species for the cure inhibitor or an activator for the peroxide is used.

So far passive resin blockers e.g. dense fleece or felt materials based on polyester have been applied. These are used to fill gaps and increase resistance to the flow of the infusion resin.

Embodiments of the invention offer a new option with materials that are less dense, and which can optionally only block the resin flow on one or two surfaces and thus not act as resin blocker in all directions. This offers completely new ways of use of these materials being able to avoid race tracks along one surface, but the material can still be saturated and act as flow medium in another direction.

By treating either the bulk material or only some surfaces a rather open structure can be kept being open for vacuum. The local increase of viscosity which can even go to gelation acts against race tracks and is more robust to be used in difficult geometries because even a not fully filled gap will still reduce race tracks by slowing down or stopping infusion resin by reaction with the functionalized surface.

Embodiments of the invention are especially useful for infusion with low viscosity resins with viscosity below 100 mPas at infusion temperature, but can be applied for higher viscous infusion resins as well.

### Brief description of the drawings

Fig. 1 schematically illustrates an exemplary embodiment of a porous material.
Figure 2 schematically illustrates another exemplary embodiment of a porous material.
Figure 3 schematically illustrates another exemplary embodiment of a porous material.

### Detailed description of the drawings

The illustration in the drawings is schematical. In different drawings, similar or identical elements are provided with the same reference signs.

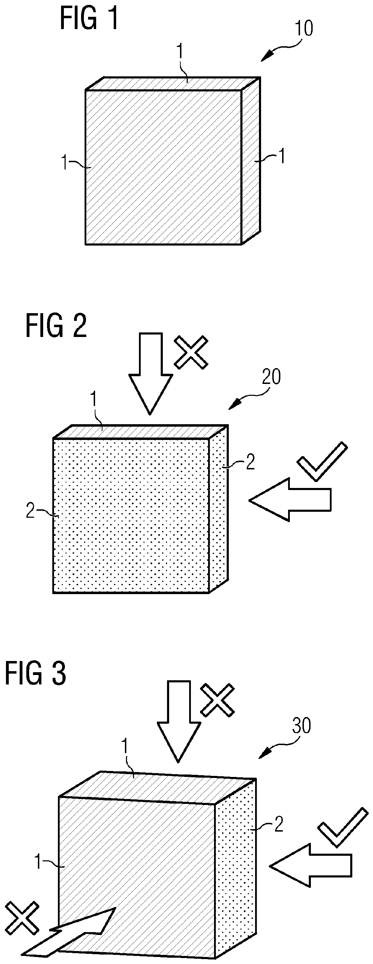

Fig. 1 schematically illustrates an exemplary embodiment of a porous material 10. The porous material 10 as shown in Fig. 1 is provided with reactive components at all surfaces, indicated as hatched area 1. Reactive components are also present in the bulk material of the porous material 10. Thus, in the embodiment shown in Fig. 1, the reactive component is substantially uniformly distributed over and within the porous material 10. When used in a method of producing a wind turbine blade or a part thereof, the porous material 10 may be arranged in an interior of the mold at specific sites, where it is desired to increase the viscosity of the infusion resin, for instance at race tracks.

Fig. 2 schematically illustrates another exemplary embodiment of a porous material 20. The porous material 20 as shown in Fig. 2 is provided with reactive components only at one surface, indicated as hatched area 1, whereas the other surfaces are substantially free of reactive components, indicated as dotted areas 2. Thus, in the embodiment shown in Fig. 2, only a part of the porous material 20 is provided with a reactive component. When used in a method of producing a wind turbine blade or a part thereof, the porous material 20 may suppress or block resin flow in some directions, more specifically in the direction from top to bottom in the depicted orientation of Fig. 2, but not in the other directions, such as from the right side to the left in the depicted orientation of Fig. 2.

A similar control of resin flow may be achieved by arranging a porous material that is entirely provided with a reactive component (e.g. the porous material 10 shown in Fig. 1) only at specific surfaces of the mold, more specifically at an upper surface of the mold in the depicted orientation of Fig. 2.

Fig. 3 schematically illustrates another exemplary embodiment of a porous material 30. The porous material 30 as shown in Fig. 3 is provided with reactive components at two surfaces, indicated as hatched areas 1, whereas the other surface is substantially free of reactive components, indicated as dotted area 2. Thus, in the embodiment shown in Fig. 3, only a part of the porous material 30 is provided with a reactive component. When used in a method of producing a wind turbine blade or a part thereof, the porous material 30 may suppress or block resin flow in some directions, more specifically in the directions from top to bottom and from front to back in the depicted orientation of Fig. 3, but not in the direction from the right side to the left in the depicted orientation of Fig. 3. A similar control of resin flow may be achieved by arranging a porous material that is entirely provided with a reactive component (e.g. the porous material 10 shown in Fig. 1) only at specific surfaces of the mold, more specifically at an upper surface and a front surface of the mold in the depicted orientation of Fig. 3.

While the present invention has been described in detail by way of specific embodiments and examples, it should be appreciated the invention is not limited thereto and various alterations and modifications are possible, without departing from the scope of the invention.

## Claims

1. A porous material provided with a reactive component capable of reacting with an infusion resin.

2. The porous material as set forth in claim 1, wherein the porous material comprises at least one of an open cell foam, a fleece, a felt, a mesh and a fabric.

3. The porous material as set forth in any one of the preceding claims, wherein the porous material has a porosity of from 50 to 90 %.

4. The porous material as set forth in any one of the preceding claims, wherein the reactive component comprises at least one of an amine functional group, a thiol functional group and a hydroxy functional group.

5. The porous material as set forth in any one of the preceding claims, wherein the reactive component is selected from the group consisting of pentaerythritol tetrakis(3-mercaptopropionate), 2-hydroxymethyl-2-methyl-1,3-propanediol tris-(3-mercaptopropionate), tris[2-(3-mercaptopropionyloxy)ethyl] isocyanurate, diethylenetriamine, triethylenetetramine, dipropylenetriamine, 1,3-bis(aminomethyl) cyclohexane, 3,3'-dimethyl-4,4'-diaminodicyclohexylmethane, 4,4'-diaminodicyclohexylmethane, xylene diamine, glycerol and polypropylene glycol.

6. A method of producing a wind turbine blade or a part thereof, the method comprising:
providing a mold containing a porous material as set forth in any one of claims 1 to 5,
applying an infusion resin into the mold by a vacuum infusion method, in particular vacuum assisted resin transfer molding,
curing the infusion resin.

7. The method as set forth in claim 6, wherein the infusion resin is selected from the group consisting of an epoxy amine infusion resin, a polyurethane infusion resin and a radically curing infusion resin.

8. The method as set forth in claim 6 or claim 7, wherein the infusion resin comprises an epoxy amine infusion resin and the reactive component comprises at least one of an amine functional group and a thiol functional group.

9. The method as set forth in any one of claims 6 to 8, wherein the infusion resin comprises a polyurethane infusion resin and the reactive component comprises at least one of an amine functional group and a hydroxy functional group.

10. The method as set forth in any one of claims 6 to 9, wherein the infusion resin has a viscosity of less than 100 mPa·s at infusion temperature.

11. The method as set forth in any one of claims 6 to 10, wherein the porous material is provided at only a part of the mold.

12. The method as set forth in any one of claims 6 to 11, wherein the method further comprises, after curing the infusion resin, removing the mold.

13. A wind turbine blade or a part thereof obtainable by a method according to any one of claims 6 to 12.

14. Use of a porous material for increasing the viscosity of an infusion resin in a vacuum infusion method, wherein the porous material is functionalized with a reactive component capable of reacting with the infusion resin.
